# EUROPÄISCHE PATENTSCHRIFT

(11) **EP 0 572 037 B1**
(45) Veröffentlichungstag und Bekanntmachung des Hinweises auf die Patenterteilung: **10.07.1996**
(21) Anmeldenummer: 93108712.6
(22) Anmeldetag: 28.05.1993
(51) Int. Cl.: D21H 19/40, C09C 1/42, C01B 33/20

(54) **Streichpigment**
Coating pigment
Pigment de couchage

(30) Priorität: 29.05.1992 DE 4217779
(43) Veröffentlichungstag der Anmeldung: 01.12.1993
(73) Patentinhaber: SÜD-CHEMIE AG, D-80333 München (DE)
(72) Erfinder: Coutelle, Helmut, Dr., W-8050 Freising (DE); Ruf, Friedrich, Dr., W-8311 Ast (DE); Hlavatsch, Joachim, Dr., W-8012 Ottobrunn (DE); Schott, Hartmann, W-8054 Mauern (DE)
(74) Vertreter: Reitzner, Bruno, Dr.

(56) Entgegenhaltungen:
- EP-A- 0 026 075
- EP-A- 0 283 300
- EP-A- 0 489 422

## Beschreibung

Die Erfindung betrifft Streichpigmente für cellulosehaltige Druckträger, insbesondere für Papier und Karton, welche mindestens ein quellfähiges Schichtsilikat enthalten.

Streichpigmente auf der Basis von quellfähigen, smektitischen Tonen sind beispielsweise aus der EP-A-0 283 300 bekannt. Neben den smektitischen Tonen können diese Streichpigmente noch bis zu 30 % Sekundär- oder Extenderpigmente, wie Kaolin, oder Calciumcarbonat, enthalten. Der Pigmentauftrag beträgt nicht mehr als 5 g/m², vorzugsweise nicht mehr als 1 g/m². Als smektitischer Ton kann beispielsweise natürlich vorkommender Natriumbentonit (Wyoming-Bentonit) verwendet werden. Dieser hat aber ein Quellvermögen um 50 ml (2 g in 100 ml Wasser). Trotz seines hohen Quellvermögens ist seine Haftung an Papier ohne Bindemittel sehr schlecht, weshalb die Bedruckbarkeit nach dem Offset-Druck-Verfahren (Wasserkontakt) problematisch ist. Weiterhin ist die Verwendung von europäischen Bentoniten mit austauschbaren Natrium- und Calciumionen beschrieben. Die mit diesen Bentoniten hergestellten Streichfarben ergeben ohne Bindemittel eine schlechte Haftung an der Papieroberfläche, was sich insbesondere in der Erscheinung der "missing dots" äußert. Ansonsten sind diese Schichtsilikate und die Anwendungsbedingungen nicht näher definiert. Da es sich bei diesen Bentoniten um Naturprodukte handelt, variieren die Eigenschaften beträchtlich, was sich insbesondere in einer sehr schlechten Handhabbarkeit in der Produktion und einer schwankenden Druckopazität und Durchschlagen der Druckfarben bemerkbar macht. Bei den Natriumbentoniten verhindert das hohe Quellvolumen und damit die hohe Viskosität die Möglichkeit, das Streichpigment unter normalen Betriebsbedingungen aufzutragen (vergl. auch "TAPPI-Journal", Mai 1992, Seiten 231 bis 237; "Das Papier", Heft 16, 1992, Seiten 273 bis 277). Die mit diesen Pigmenten gestrichenen Papiere hatten nur eine geringe Rupffestigkeit, weshalb zur Verbesserung der Haftung an der Papierfaser in fast allen Beispielen Bindemittel, wie Stärke oder Latex, zugegeben wurden und ein synergistischer Effekt beobachtet wurde. Diese Bindemittel verteuern die Oberflächenveredelung und erschweren das Recyclen bzw. Deinken der Papiere beim Wiederaufarbeiten und erhöhen zudem dann auch den CSB-Wert des im allgemeinen im Kreislauf geführten Aufbereitungswassers, was wiederum zu erhöhter Störanfälligkeit der Papierproduktion (Runability) führt. So kann es zu Verklebungen auf Filzen, Sieben etc. und Löchern im Papier kommen. Zudem werden Pigmentstrich und Druckfarbe so auf der Faser fixiert, daß ein Abtrennen der Druckfarbe nur mit Hilfe größerer Chemikalienmengen möglich oder mit größeren Faserverlusten oder Weißgradeinbußen verbunden ist.

Aus der DE-C-736 450 ist ein Verfahren zur Herstellung gestrichener Papiere unter Verwendung einer bindemittel- und pigmenthaltigen Streichmasse bekannt, wobei Bentonit oder ein ähnlicher Quellton als Bindemittel in der Streichmasse dient. Eine Charakterisierung des verwendeten Materials wird jedoch nicht durchgeführt. Bindemittel werden normalerweise in der Größenordnung von 15 bis 25 % eingesetzt, so daß der Anteil des Bentonits nach dieser Patentschrift wohl in der gleichen Größenordnung liegt. Die Fixierung der Pigmente mit Hilfe des anorganischen Bindemittels Bentonit ist ebenfalls nicht nachgewiesen, und es wird die Zugabe von üblichen Bindemitteln erwähnt.

Aus der EP-A-0 489 422 (veröffentlicht am 10.06.92) sind wasserhaltige organophile Schichtsilikate auf Bentonitbasis zum Beschichten von Papier bekannt. Die organophilen Schichtsilikate werden durch Umsetzung von Natriumbentonit mit quaternären Ammoniumsalzen im Verhältnis 69 : 31 erhalten. Einen ähnlichen organophilen Bentonit und dessen Verwendung in Streichmassen auf der Basis organischer Lösungsmittel beschreibt die EP-A-0 192 252. Es handelt sich in beiden Fällen nicht um die Modifizierung der Oberfläche des Natriumbentonits im Sinne einer Veränderung des Zeta-potentials, sondern um eine vollständige Hydrophobierung des Bentonits. Diese Pigmente können daher nur unter Verwendung von zusätzlichen organischen Netzmitteln zu wäßrigen Streichfarben verarbeitet werden.

Eine ähnliche Umsetzung (Blattsilikate auf der Basis Vermiculit und/oder Glimmer) mit Alkylammoniumverbindungen ist aus der DE-C-36 36 850 bekannt. Aus der wäßrigen Suspension dieser organophilen Silikate können Filme hergestellt werden. Diese Materialien sind jedoch für den Zweck der vorliegenden Erfindung völlig ungeeignet.

Nach der US-A-4 943 324 werden Papierfüllstoffe durch Behandlung der Oberflächen von Kaolinpigmenten mit einem Amin erhalten. Bezweckt wird die Verminderung des bei der Verwendung von anorganischen Füllstoffen auftretenden Verlustes der Festigkeit zwischen den Papierfasern.

Aus der US-A-3 508 952 ist schließlich die Vorbehandlung von Schichtsilikaten mit Chrom- und/oder Zirkonsalzen zur Verminderung der Gasdurchlässigkeit von cellulosehaltigen Substraten bekannt.

Der Erfindung lag die Aufgabe zugrunde, Streichpigmente zu finden, die keine der vorstehend angegebenen Nachteile aufweisen und eine verbesserte Bedruckbarkeit, einen besseren Druckfarbenstand und bessere Druckopazität der beschichteten Druckträger aufweisen. Vor allem sollten die Streichpigmente auch auf modernen Streichaggregaten und unter hohem Geschwindigkeiten auftragbar sein und für die gewünschten Effekte (Bedruckbarkeit) sollte ein niedriges Streichgewicht ausreichen, um die Möglichkeit der Herstellung von Papieren von z.B. LWC- und ULWC-Qualität mit deutlich verringertem Flächengewicht zu garantieren. Ferner lag der Erfindung die Aufgabe zugrunde, Druckträger bereitzustellen, die leicht deinkbar und damit "umweltverträglicher" sind, als die bisher vorhandenen Druckträger.

Überraschenderweise wurde nun gefunden, daß auch unter den modernen Bedruckungsbedingungen (hohe Druckgeschwindigkeit), rupfende Druckfarben, hohe Feuchtigkeit (z.B. bei der Offset-Bedruckung) usw. das Streichpigment auf der Faser auch ohne organische Bindemittel so fixierbar ist, daß beim Bedrucken der Papiere kein Stauben oder Abmehlen des Pigmentstrichs auftritt und die resultierenden Druckträger gut zu deinken sind.

Gegenstand der Erfindung ist ein Streichpigment zur Beschichtung von Druckträgern, insbesondere Papier und Karton, enthaltend mindestens ein quellfähiges Schichtsilikat, welches im wesentlichen ohne organische Bindemittel auf den Druckträger fixierbar ist, wobei der Anteil des quellfähigen Schichtsilikats mindestens 30 Gew.% und das Quellvolumen des Streichpigments 5 bis 30 ml, bezogen auf eine Suspension von 2 g Streichpigment in 100 ml Wasser beträgt, das quellfähige Schichtsilikat ein Zeta-Potential von -35 bis +10 mV hat und das quellfähige Schichtsilikat zur Einstellung des Zeta-Potentials mit bis zu 4 Gew.-% eines Kationisierungsmittels behandelt ist.

Ist das Quellvolumen des Streichpigments, das ein quellfähiges Schichtsilikat enthält, höher als 30 ml, so steigt die Viskosität der damit herzustellenden Streichfarbe soweit an, daß diese Streichfarbe nicht mehr mit den normalen, modernen Auftragsaggregaten gestrichen werden kann. Prinzipiell kann die Streichfarbe zwar weiter verdünnt werden, um die notwendige Viskosität durch Verringerung des Feststoffgehaltes einzustellen; damit handelt man sich aber andere Nachteile ein. Durch die hohe Feuchtigkeitsbelastung des Papiers beim Streichen steigt die Häufigkeit der Rißbildung immens an, so daß nur sehr feste und wasserresistente Papiere verwendet werden können. Diese Papiere zeichnen sich normalerweise durch hohe Flächengewichte aus und sind schon an sich gut bedruckbar. Gerade die sehr dünnen Papiere reißen jedoch bei Belastung mit Wasser sehr schnell, so daß diese Papiere mit einem Flächengewicht von 20 - 40 g/m² für eine Beschichtung mit niedrigem Feststoffgehalt nicht in Frage kommen. Zudem sind die für die Trocknung der mit Streichfarben mit niedrigem Feststoffgehalt gestrichenen Papiere notwendigen Trockenstrecken in den normalen Papiermaschinen nicht vorhanden. Die Papiermaschinen sind aufgrund des mangelnden Platzes auch kaum für diese Zwecke nachrüstbar.

Falls die Viskosität der Streichfarbe zu hoch und/oder der Feststoffgehalt zu niedrig ist, läßt sich das angestrebte Auftragsgewicht nur schlecht kontrollieren, so daß sich die gewünschten Beschichtungen mit vorzugsweise 1,1 bis 3,0 g/m² und Seite nicht aufbringen lassen. Liegt das Quellvolumen unter dem erfindungsgemäß angegebenen Bereich, so sind zwar Streichfarben mit höherem Feststoffgehalt und dennoch gut verarbeitbarer Viskosität herstellbar; die Haftung des Pigments auf dem Papier läßt dann jedoch stark nach. Dies ist darin begründet, daß das quellfähige Schichtsilikat dann nur noch unvollständig dispergiert und in Einzellamellen delaminiert vorliegt und seine Wirkung als Bindemittel nicht mehr voll entfalten kann.

An diesem Widerspruch der Anforderungen zwischen hohem Quellvolumen und guter Wirkung (aber unbrauchbarer Viskosität) und niedrigem Quellvolumen und hohem Feststoffgehalt (aber schlechter Wirkung) ist die Einsatzmöglichkeit derartiger Pigmente bis heute gescheitert.

Bei den angegebenen Quellvolumina ist die Viskosität der aus den Streichpigmenten hergestellten Streichfarben auch bei einem hohen Pigmentgehalt noch verhältnismäßig niedrig. Andererseits ergibt sich innerhalb dieses Bereichs eine überraschend gute Haftung der Streichfarbe auf dem Druckträger.

Das Quellvolumen des Streichpigments, das vorzugsweise 8 bis 30 ml beträgt, wird nach folgender Meßmethode ermittelt: 2g Pigment werden langsam und portionsweise mit einem Spatel auf die Wasseroberfläche eines mit 100 ml destilliertem Wasser gefüllten Standzylinders gegeben. Erst wenn die erste Portion abgesunken ist, wird die zweite nachgegeben. Nachdem 2g Pigment vollständig auf den Boden des Meßzylinders abgesunken sind, wird die Menge der gequollenen Substanz am Meßzylinder nach lh abgelesen und in ml/2g angegeben.

Das in dem erfindungsgemäßen Streichpigment verwendete quellfähige Schichtsilikat hat als 2 gew.-%ige Dispersion in Wasser von 20°C vorzugsweise einen pH-Wert von 7 bis 12, insbesondere von 8,5 bis 10,5. Dieser wird üblicherweise mittels eines pH-Meters (Glaselektrode) analog DIN 53200 ermittelt.

Vorzugsweise wird ein quellfähiges Schichtsilikat mit einer BET-Oberfläche von 20 bis 120, insbesondere von 30 bis 80m²/g, verwendet. Die BET-Oberfläche wird nach der Adsorptionsmethode mit Stickstoff nach DIN 66132 bestimmt.

Vorzugsweise hat das quellfähige Schichtsilikat im Streichpigment ein Zeta-Potential von -30 bis -5mV. Das Zeta-Potential wird nach der Methode der Elektrophorese mit Hilfe eines "Laser-Zee-Meters 501" der Firma Pem Chem in 0,1 %-iger Suspension bestimmt.

Als quellfähige Schichtsilikate werden vor allem Minerale der Smektitgruppe verwendet, wie z.B. Bentonit, Montmorillonit, Hectorit, Saponit oder Nontronit. Es können sowohl natürliche, als auch synthetische Schichtsilikate, z.B. synthetischer Hectorit, verwendet werden.

Aus Gründen der Verfügbarkeit wird Bentonit bevorzugt, wobei sowohl natürliche Na-Bentonite wie auch Ca-Bentonite Verwendung finden.

Im allgemeinen werden alle verwendeten quellfähigen Schichtsilikate auch einer Vorbehandlung unterzogen, um Fremdsubstanzen, wie Sand, Feldspat und andere harte Verunreinigungen (nachstehend "Grit" genannt) zu entfernen. Die Reinigung erfolgt vorzugsweise mit Hilfe von Mahlsichtaggregaten oder nach anderen Standardverfahren der mineralverarbeitenden Industrie.

Vorzugsweise beträgt der Anteil der quellfähigen Schichtsilikate mindestens 40, insbesondere mindestens 50 Gew.-%. Die erfindungsgemäßen Streichpigmente können neben dem quellfähigen Schichtsilikat auch Extenderpigmente enthalten. Vorzugsweise verwendet man 70 bis 31 Gew.-% eines Extenderpigments, wie z.B. delaminiertes Kaolin, calciniertes Kaolin, natürliches oder gefälltes Calciumcarbonat, Aluminiumhydroxid, Titandioxid oder ein anderes für die Papierbeschichtung geeignetes Streichpigment. Wird als Ausgangsmaterial für das quellfähige Schichtsilikat z.B. Bentonit verwendet, so kann man natürlich vorkommende Alkalibentonite, insbesondere Natriumbentonite einsetzen, da diese den Streichpigmenten das erforderliche Quellvolumen verleihen.

Die europäischen Bentonite mit einem höheren Gehalt an austauschbaren Erdalkali-Ionen, insbesondere Calcium-Ionen, erreichen auch ohne Verschnittpigmente das erforderliche Quellvolumen nicht und müssen deshalb einer gezielten Aktivierung mit geeigneten Alkaliverbindungen unterworfen werden. Für diese alkalische Aktivierung eignen sich z.B. Soda, Wasserglas, Natriumaluminat, Natriumchlorid, Natriumsulfat, Natriumhydrogencarbonat, Natriumphosphate, Natrium-Zeolith usw. Prinzipiell sind auch andere Alkaliverbindungen geeignet, die gewünschten Eigenschaften einzustellen. Quellfähige natürliche Natriumbentonite können ebenfalls durch eine gezielte Aktivierung auf die gewünschten Quellvolumina und Viskositäten eingestellt werden, z.B. durch eine Aktivierung mit Calciumverbindungen, wie z.B. Calciumcarbonat usw. Damit kann ein unter Umständen zu hohes Quellvermögen des Schichtsilikats gesenkt und das Quellvermögen des Streichpigments in den erfindungsgemäßen Bereich gebracht werden. Unter Umständen genügt auch eine einfache mechanische Aktivierung ohne Zusatz von Chemikalien, um erfindungsgemäße Streichpigmente zu erzeugen.

Mit Hilfe der erfindungsgemäßen Streichpigmente können auch Papiere oder andere Druckträger mit niedrigen Flächengewichten, z.B. Katalogpapiere gestrichen werden, wobei auch bei niedrigen Flächengewichten eine gute Bedruckbarkeit erhalten wird und die Druckfarbe nicht durchschlägt.

Diese Papiere wurden bisher durch Streichen mit konventionellen Streichpigmenten, die über organische Bindemittel fixiert werden müssen, hergestellt, wobei eine Auftragsmenge von etwa 5 bis 15g/m² und Seite normal ist. Die mit dem erfindungsgemäßen Streichpigment beschichteten Papiere erlauben die Herstellung von vergleichbar bedruckbaren Papieren auch bei Auftragsmengen von 0,5 bis 6,0 g/m² und Seite, vorzugsweise von 0,5 bis 3,0 g/m² und Seite. Überraschenderweise wurde auch gefunden, daß die so hergestellten Papiere sowohl im Tiefdruck- als auch im Offsetdruckvefahren bedruckbar sind. Die erfindungsgemäß hergestellten Papiere sind zudem gut zu deinken.

Der Grund, warum durch die erfindungsgemäße Auswahl der Eigenschaften der Streichpigmente alle erwünschten Papiereigenschaften erhalten werden, ist nicht genau bekannt. Streichpigmente mit dem angegebenen Quellvolumen zeigen die für die homogene Beschichtung mit Hilfe der gängigen, modernen Auftragsverfahren geeignete Streichfarbenviskosität und Feststoffkonzentration. Die BET-Oberfläche und der pH-Wert sind ebenfalls Parameter, die sowohl die Verarbeitungseigenschaften der mit dem erfindungsgemäßen Streichpigment hergestellten Streichfarben als auch die Bedruckbarkeit der damit beschichteten Druckträger beeinflussen.

Die angegebenen Zeta-Potential-Bereiche, die mit Hilfe eines Kationisierungsmittels (bis zu 4 Gew.-%, vorzugsweise 0,5 bis 2,0 Gew.-%) eingestellt werden können, erlauben eine Optimierung der eigentlich widersprüchlichen Anforderungen von guter Bedruckbarkeit (und damit guter Fixierung des Strichs auf dem Fasergefüge) und leichter Deinkbarkeit (und damit erleichterter Druckfarben- und Strichablösung). Während Streichpigmente mit einem stärker negativen Zeta-Potential als -35mV nur sehr schwer auf der Faser, die selbst negativ geladen ist, zu fixieren sind, zeigen die erfindungsgemäßen Streichpigmente mit einem Zeta-Potential zwischen -35mV und +10mV eine ausreichende Haftung und ergeben Papiere mit guter Bedruckbarkeit und Rupffestigkeit. Streichpigmente, die ein Zeta-Potential von größer +10mV aufweisen, haften schon aus elektrostatischen Gründen sehr gut auf der Faser, sind aber demgemäß nur sehr schwer zu deinken. Die Möglichkeit, auch bei den geforderten niedrigen Strichgewichten eine homogene Beschichtung zu erreichen, ist bei Streichpigmenten mit einem Zeta-Potential über +10mV ebenfalls limitiert, da diese Pigmente zur Wolkenbildung und damit ungleichmäßiger Beschichtung neigen. Die gute Deinkbarkeit der erfindungsgemäß hergestellten Druckträger ist vermutlich darauf zurückzuführen, daß bei den üblichen Deinkprozessen die Druckfarbe zusammen mit dem Streichpigment von der Papierfaser abgelöst wird.

In Ausnahmefällen weisen die erfindungsgemäßen Streichpigmente Zeta-Potentiale auf, die außerhalb des genannten Bereichs liegen. Im Normalfall sind die Pigmente dann negativer als angegeben. Durch Zugabe eines Kationisierungsmittels, bevorzugt zum quellfähigen Schichtsilikat, kann jedoch der gewünschte Bereich eingestellt werden. Die verwendeten Kationisierungsmittel können alle üblichen Mittel sein, wie z.B. Poly-Diallyl-Dimethylammoniumchlorid (Poly-DADMAC), kationische Kohlenhydrate, wie kationische Stärke, Guar usw. Auch andere quaternäre Ammoniumverbindungen sind einsetzbar. Bevorzugt werden Kationisierungsmittel verwendet, die nicht auch als Bindemittel wirken und die Eigenschaften des Strichs verändern können.

Gegenstand der Erfindung ist ferner eine wäßrige Streichfarbe, enthaltend ein Streichpigment, wie es vorstehend definiert ist, in einer Konzentration von 5 bis 50 Gew.-%, vorzugsweise von 16 bis 50 Gew.-%, insbesondere von 21 bis 40 Gew.-%, sowie gegebenenfalls ein Dispergierhilfsmittel.

Vorzugsweise hat die wäßrige Streichfarbe eine Viskosität von bis zu etwa 2000 mPa.s, insbesondere von 100 bis 2000 mPa.s.

Als Dispergierhilfsmittel können beispielsweise Polyacrylate, Polyphosphate oder ander übliche Dispergierhilfsmittel eingesetzt werden. Die erfindungsgemäßen Streichfarben haften überraschenderweise auch ohne Bindemittel auf dem Druckträger.

Der pH-Wert der Streichfarbe beträgt vorzugsweise etwa 7 bis 12, insbesondere etwa 8,5 bis 10,5.

Die Erfindung betrifft ferner ein Verfahren zum Beschichten eines Druckträgers mit einer wäßrigen Streichfarbe, wie sie vorstehend definiert ist; dieses Verfahren ist dadurch gekennzeichnet, daß man die Streichfarbe mit einer Geschwindigkeit von 500 bis 2000 mmin-¹ auf den Druckträger aufbringt.

Gegenstand der Erfindung ist ferner ein Druckträger, insbesondere Papier oder Karton, der ein- oder zweiseitig mit der vorstehend definierten Streichfarbe beschichtet ist. Vorzugsweise beträgt das Flächengewicht etwa 25 bis 38 g/m². Vorzugsweise beträgt das Streichpigmentgewicht etwa 0,5 bis 6,0, insbesondere 1,1 bis 3,0 g/m² pro Seite. Der Druckträger zeichnet sich dadurch aus, daß er sowohl in Tiefdruck- als auch im Offesetdruckverfahren bedruckbar ist und zudem leicht deinkt werden kann. Der beschichtete Druckträger wird nach der Beschichtung einer Super- oder Softkalandrierung unterzogen, wobei die Softkalandrierung bevorzugt wird.

Bedruckte Druckträger, insbesondere Papier und Karton, können leicht deinkt werden, indem man einen Druckträger, der ein- oder beidseitig mit dem im wesentlichen ohne Bindemittel fixierten erfindungsgemäßen Streichpigment beschichtet ist, einem üblichen Deinkverfahren unterzieht. Der bedruckte Druckträger enthält mindestens 1 g, vorzugsweise mindestens 1,5 g Streichpigment pro m² und Seite enthält, wobei die Farbe im wesentlichen in der Streichpigmentschicht adsorbiert ist.

Die Erfindung ist durch die nachstehenden Beispiele in nichteinschränkender Weise erläutert.

### Beispiel 1

Ein auf den Zwischenschichtgitterplätzen Ca²⁺ und Mg²⁺ enthaltender Bentonit griechischen Ursprungs ("Ca/Mg-Bentonit") wurde 16 %ig in Wasser suspendiert und durch Ausreinigung über einen Hydrozyklon von gröberen Verunreinigungen, dem sogenannten "Grit" befreit. Das gritfreie Material wurde anschließend durch Vakuumfiltration auf einen Wassergehalt von 30 bis 50 Gew.-% eingedickt und mit Soda in einem Doppelwellenmischer 5 min. aktiviert. Das Produkt wurde schonend bei 90°C in einem Umlufttrockenschrank auf einen Wassergehalt von etwa 10 Gew.-% getrocknet und in einer Schlagrotormühle auf einen d50-Wert (gemessen in Malvern Particle Sizer 2600 c) von 5 bis 7 µm vermahlen.

Ein Großteil der Ca- und Ca/Mg-Bentonite der nachfolgenden Beispiele wurde so aufbereitet. Die Na-Bentonite wurden 2%ig in Wasser suspendiert und über wiederholte Sedimentation und Dekantation ausgereinigt. Die Eindickung erfolgte durch kombinierte Sedimentation und Zentrifugierung. Die Aktivierung, Trocknung und Vermahlung wurden wie oben beschrieben durchgeführt.

Die relevanten Daten des mit 1% Soda aktivierten griechischen Bentonits sind in Tabelle I zusammengefaßt. Sie wurden nach folgendem Verfahren ermittelt:
- Quellvolumen:
   Ein kalibrierter 100 ml-Meßzylinder wird mit 100 ml dest. Wasser gefüllt. 2,0 g der zu messenden Substanz werden in Portionen von 0,1 bis 0,2 g langsam auf die Wasseroberfläche gegeben. Nach dem Absinken des Materials wird das nächste Quantum aufgegeben. Nach Beendigung der Zugabe wartet man eine Stunde und liest dann das Volumen der aufgequollenen Substanz in ml/2g ab.
- pH-Wert:
   Der pH-Wert wird mittels einer Glaselektrode nach DIN ISO 7879 ermittelt.
- Zeta-Potential:
   Die Messung des Zeta-Potentials erfolgte nach der Methode der Elektrophorese an dem "Laser-Zee-Meter 501" der Fa. Pem Chem in 0,1%-igen Suspensionen.
- Spezifische Oberfläche:
   Die Messung wurde nach der BET-Methode durchgeführt. Es wurde nach der DIN 66132 gearbeitet.
- Strich:
   Der aktivierte Bentonit wurde durch 5-minütige Scherung bei 5000 U/min. im "Ultra-Turrax" zu Suspensionen mit Feststoffgehalten von (a) 5, (b) 10, (c) 16, (d) 22 und (e) 30 Gew.-% in Wasser verarbeitet und mittels eines Handrakels auf 49 g/m² Streichrohpapier gerakelt (Beispiele 1a bis 1e) bzw. industriell auf einem Gravurcoater mit einer Arbeitsbreite von 1250 mm bei einer Geschwindigkeit von 550 m/min gestrichen. Der Feststoffgehalt der Streichfarbe lag hier bei 21 Gew.-% (Beispiel 1f). Die Bestimmung des Auftragsgewichtes erfolgte durch Rückwägung. Die Ergebnisse sind in Tabelle I angegeben.
- Strichhaftung:
   Das gestrichene und bei 50 % rel. Luftfeuchte äquilibrierte Papier wurde auf einer Länge von 15 cm mit einem 20 mm breiten Klebstreifen ("Tesa"-Streifen) beklebt, der durch Auflegen eines Gewichtes mit einem Druck von 50 kg/cm² für 30 sec fixiert wurde. Nach zügigem Abziehen des Klebstreifens wurden die Menge und Verteilung der herausgerissenen Strichpartikel visuell beurteilt. In der Tabelle bedeutet
   +++ völlige Fixierung des Striches; keine Strichpartikel werden abgelöst;
   --- keinerlei Haftung des Striches, vollständige Ablösung.
- Bedruckbarkeit:
   Die gecoateten Papiere wurden in der RK-Labortiefdruckmaschine der Fa. Print Coat Instrument Ltd./UK bei Näpfchentiefen von 0,4 bis 1,2µm mit schwarzer Tiefdruckfarbe der Fa. Kast und Ehinger GmbH bedruckt. Die Druckbeurteilung erfolgte visuell, wobei die Halbtonfläche (Rastertiefe 0,8 µm) zur Beurteilung der Druckgüte und die Volltonfläche (Rastertiefe 1,2 µm) zur Bewertung des Druckfarbendurchscheinens und -durchschlagens herangezogen wurde.

Hierbei bedeutet
+++sehr gutes, ruhiges Druckbild bei sehr geringem Durchschlagen und Durchscheinen auf der Blattrückseite;
---sehr schlechtes, unruhiges Druckbild, starkes Durchschlagen und Durchscheinen auf die Blattrückseite.

Wie die Tabellen Ia und Ib zeigen, erfüllten die Materialien von Beispiel 1a bis 1f alle erfindungsgemäßen Vorgaben und ergaben einen ohne Bindedemittel gut haftenden und trotz des geringen Strichauftrags exzellent bedruckbaren Strich.

### Beispiele 2 und 3 (Vergleich)

Die mit höheren Sodamengen aktivierten Bentonite der Beispiele 2 und 3 erfüllten bezüglich des Quellvolumens nicht die erfindungsgemäßen Vorgaben und wiesen dementsprechend schlechtere Strichhaftung und Bedruckbarkeit auf. Auch das Zeta-Potential lag in Beispiel 3 außerhalb des bevorzugten Bereichs. Zusätzlich zeigten die Beispiele 2 und 3 sehr hohe Slurryviskositäten mit starker Thixotropie, so daß das angestrebte Auftragsgewicht nur durch mehrmaligen Auftrag zu erreichen war.

### Beispiel 4

Ein Ca-Bentonit türkischen Ursprungs wurde nach dem in Beispiel 1 beschriebenen Verfahren ausgereinigt und aktiviert. Daraus wurden bindemittelfreie Streichfarben mit Pigmentgehalten von 20 Gew.-% hergestellt. Die Streichfarben erfüllten alle erfindungsgemäßen Parameter und wiesen gute Strichhaftung und Bedruckbarkeit auf.

### Beispiele 5 bis 7

Die Beispiele 5 bis 7 zeigen die Möglichkeit, durch eine Aktivierung mit alternativen Alkalien, wie Wasserglas 37/40, Natriumaluminat und/oder Natriumsulfat (vergl. Tabelle Ib) erfindungsgemäße Streichpigmente zu erzeugen. Die Pigmente nach den Beispielen 5 bis 7 ließen sich bei Feststoffgehalten von 25 % gut verarbeiten, die Striche zeigten gute Haftung und Bedruckbarkeit.

### Beispiele 8 (Vergleich), 9 bis 11 und 12 (Vergleich)

Ca-Bentonit bayerischen Ursprungs wurde wie nach Beispiel 1 ausgereinigt und mit 0, 1, 2, 3 bzw. 6 % Soda aktiviert. Die Tabelle Ib zeigt, daß der nicht mit Soda behandelte Bentonit (Beispiel 8, Vergleich) ein zu geringes Quellvolumen und die daraus hergestellte Streichfarbe (Pigmentgehalt 30 Gew.-%) eine schlechte Strichhaftung und Bedruckbarkeit aufwies. Die Beispiele 9 bis 11 erfüllten die erfindungsgemäßen Voraussetzungen, und die daraus hergestellten Streichfarben zeigten gute Druckergebnisse bei allen Pigmentkonzentrationen. Die in Tabelle Ib angegebenen Werte wurden bei Pigmentkonzentrationen von 8 Gew.-% erhalten. Beispiel 12 (Vergleich) zeigte ein zu hohes Quellvolumen und ein zu negatives Zetapotential und war dementsprechend nicht als Streichpigment geeignet.

### Beispiele 13 und 14 (Vergleich)

Na-Bentonit aus Wyoming, wie er nach Beispiel 3 der EP-A-0283 300 verwendet wurde, wurde wie oben beschrieben, durch Sedimentation und Dekantation ausgereinigt. Das so erzeugte und das zusätzlich mit 1 % Soda aktivierte Streichpigment lag im Quellvolumen und Zetapotential außerhalb der erfindungsgemäßen Vorgaben. Die Pigmente waren sehr schwierig applizierbar und erbrachten ungenügende Haftung und Bedruckbarkeit.

### Beispiel 15

Es wurde ein synthetischer Hectorit (Optigel SH der Anmelderin) nach literaturbekannten Verfahren in einem Hydrothermalprozeß aus Wasserglas, Magnesiumchlorid und Lithiumchlorid hergestellt. Er konnte mit 1 Gew.-% Polyphosphat als Dispergiermittel bei hohen Feststoffgehalten verarbeitet werden. Tabelle Ib zeigt die Ergebnisse für eine Streichfarbe mit einem Pigmentgehalt von 15 Gew.-%.

### Beispiel 16 (Vergleich)

Bayerischer Ca-Bentonit wurde nach der Ausreinigung mit 25 % Schwefelsäure geknetet, wodurch die spezifische Oberfläche auf 155 m²/g erhöht wurde. Das Produkt war ohne Bindemittel bei einer Pigmentkonzentration von 30 Gew.-% nicht auf dem Rohpapier fixierbar, und das Papier konnte somit nicht bedruckt werden.

### Beispiele 17 (Vergleich), 18 bis 20, 21 (Vergleich) und 22 bis 24

Die in Tabelle II dargestellten Beispiele zeigen, daß sich der aktivierte Bentonit des Vergleichsbeispiels 3 durch eine entsprechende Modifizierung durch kationische Reagentien in ein erfindungsgemäßes Streichpigment überführen läßt. Hierbei vermindert sich das Quellvolumen. Gleichzeitig wird das Zeta-Potential auf Werte zwischen -35mV und +10mV eingestellt.

Die Umsetzung des Bentonits mit den kationischen Reagentien erfolgte in 5%-igen wäßrigen Suspensionen, wobei stets eine Kontaktzeit von 15 min. eingehalten wurde. Die so modifizierte Suspension konnte entweder direkt gecoated werden, oder das pigment wurde durch Vakuumfiltration isoliert, charakterisiert und zu Streichfarben mit einem Pigmentgehalt von 25 Gew.-% verarbeitet.

In Beispiel 17 (Vergleich) wurde der Bentonit mit 0,5 % eines Dicyandiamid-Formaldehydkondensats zur Reaktion gebracht. Das Quellvolumen war noch zu hoch. Auch das Zeta-Potential blieb mit -36mV noch außerhalb des bevorzugten Bereichs; das Pigment, das als Streichfarbe mit einem Pigmentgehalt von 5 Gew.% eingesetzt wurde, eignete sich nicht. In den Beispielen 18 bis 20 gelang die richtige Einstellung des Quellvolumens und des Zeta-Potentials; somit waren mit den hergestellten Streichfarben (Pigmentgehalt 25 Gew.-%) auch gute Druckresultate erzielbar.

In Beispiel 21 (Vergleich) lag das Quellvolumen am unteren Grenzwert. Ferner wurde das Pigment auf +16mV umgeladen. Das Pigment, das aus einer Streichfarbe mit einem Pigmentgehalt von 25 Gew.-% aufgetragen wurde, haftete noch am Papier, allerdings war die Bedruckbarkeit aufgrund einer wolkigen Strichstruktur relativ schlecht.

Beispiele 22 bis 24 zeigen, daß unterschiedliche kationische Reagentien erfolgreich zur Verminderung des Quellvolumens und zur Einstellung des Zeta-Potentials verwendet werden können: sowohl mit dem hochpolymeren Poly-DADMAC, dem mittelpolymeren Polyethylenimin und dem momomeren Dimethyldistearylammoniumchlorid wurden brauchbare Streichfarben (Pigmentgehalt 20 Gew.-%) erhalten.

### Beispiel 25

Auch das ungeeignete Pigment des Vergleichsbeispiels 13 ließ sich mit Dicyandiamid-Formaldehydkondensat in ein Streichpigment überführen, das Streichfarben mit guten Bedruckeigenschaften ergab. (Pigmentgehalt 15 Gew.-%)

### Beispiele 26 bis 29 und 30 (Vergleich)

Das erfindungsgemäße Material von Beispiel 1 wurde mit unterschiedlichen Mengen an Streichkaolin verschnitten und zu Streichfarben mit Feststoffgehalten von 8 bis 40 Gew.-% verarbeitet. Die Feststoffgehalte wurden dabei so gewählt, daß sich stets eine Viskosität von etwa 500 mPa.s (Brookfield 100 rpm) einstellte (Feststoffgehalte: Beispiel 26 = 15 Gew.-%; Beispiel 27 = 20 Gew.-%; Beispiel 28 = 30 Gew.-%; Beispiel 29 = 30 Gew.-%). Die Pigmentgemische wurden ohne Binderzusatz bei etwa 2,5 g/m² auf ein 49 g/m²-Rohpapier gerakelt. Nach Tabelle III ergab sich bei den Beispielen 26 bis 29, bei denen das erfindungsgemäße Quellvolumen eingehalten wurde, eine gute bis ausreichende Strichhaftung und gute Bedruckbarkeit. Das Material des Vergleichsbeispiels 30 (Pigmentgehalt 30 Gew.-%) konnte hingegen nicht mehr am Papier fixiert werden.

### Beispiele 31 und 32

In diesen Beispielen wurde das erfindungsgemäße Pigment von Beispiel 1 in wäßriger Suspension mit CaCO₃ und Al(OH)₃ im Verhältnis 50:50 verschnitten. Die Feststoffgehalte der Streichfarben betrugen etwa 35 %. Diese Beispiele zeigen, daß auch andere bekannte Streichpigmente sich im Gemisch mit dem Bentonit von Beispiel 1 bestens verarbeiten lassen.

### Beispiel 33

Der Bentonit von Beispiel 1 wurde ohne Zusatz von Bindemitteln aus einer Suspension mit 21 Gew.-% Feststoff auf einem Gravurcoater mit einer Arbeitsbreite von 1250 mm bei einer Geschwindigkeit von 550 m/min auf ein 49 g/m²-Rohpapier gestrichen. Das Auftragsgewicht betrug 1,4 g/m². Das Papier konnte sowohl im Tiefdruck wie auch - überraschenderweise - im Offsetdruck problemlos bedruckt werden.

Die Druckergebnisse waren einem auf dem gleichen Streichaggregat bei 3,5/m² applizierten Strich mit einer LLWC-Streichfarbe, bestehend aus Streichkaolin, (95 Teile), Acrylatbinder (5 Teile) und Dispergiermittel (0,5 Teile) zumindest gleichwertig.

Die gestrichenen Papiere wurden in einem Soft-Compact-Kalander (2+2 Nip) bei 130°C und einer Geschwindigkeit von 470 m/min kalandriert, mit schwarzer Testdruckfarbe im Tiefdruckverfahren bedruckt und anschließend deinkt. Hierbei zeigte es sich, daß beim erfindungsgemäßen Beispiel bereits beim Aufschlagen ein beträchtlicher Weißgradgewinn verzeichnet werden konnte.

| | Rohpapier | Beispiel 33 | Kaolin-LWC |
|---|---|---|---|
| Weißgrad nach Aufschlagen | 29,2 % | 42,3 % | 34,2 % |

Dies zeigt die sehr gute Recyclierbarkeit der erfindungsgemäßen Streichpigmente.

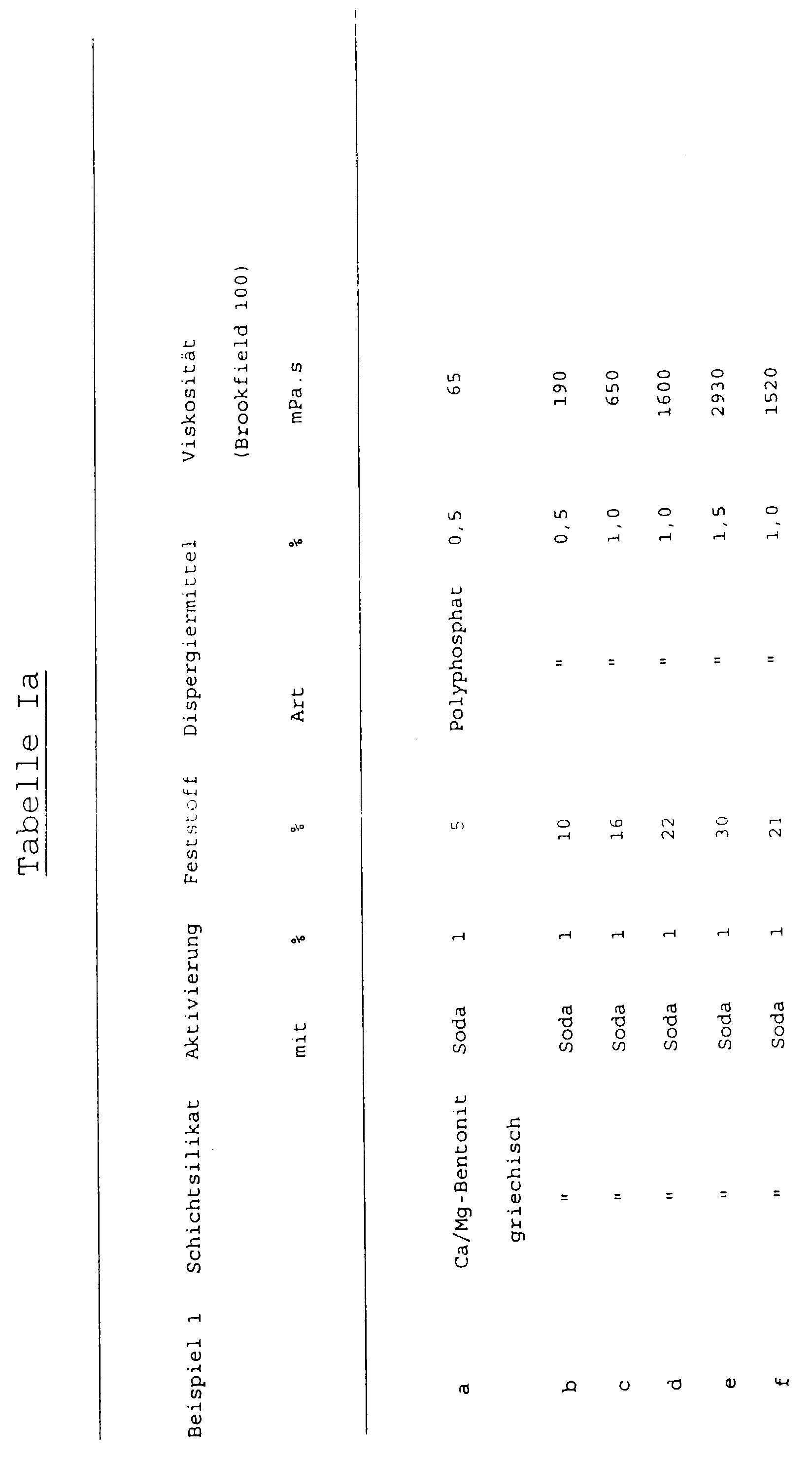

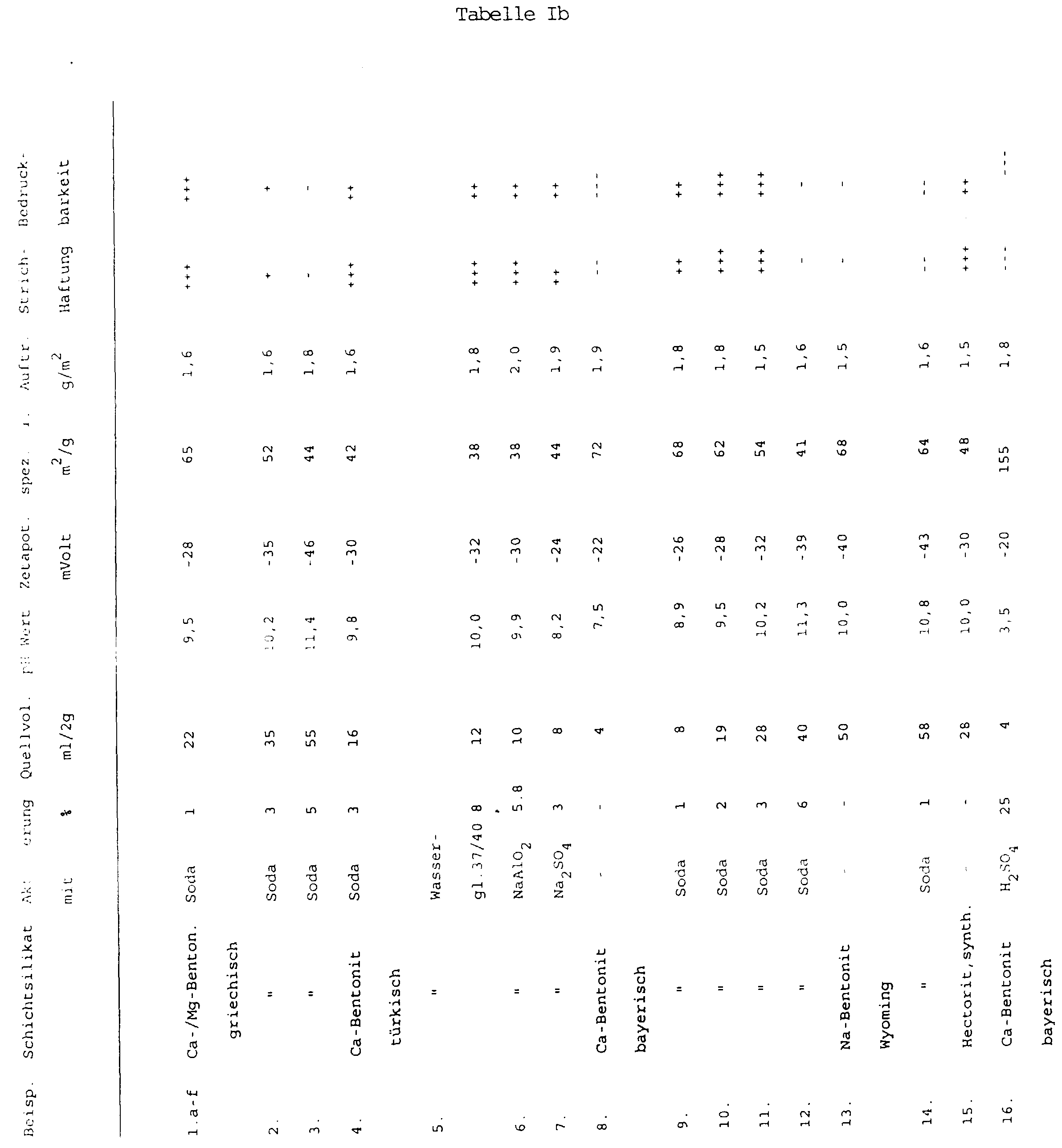

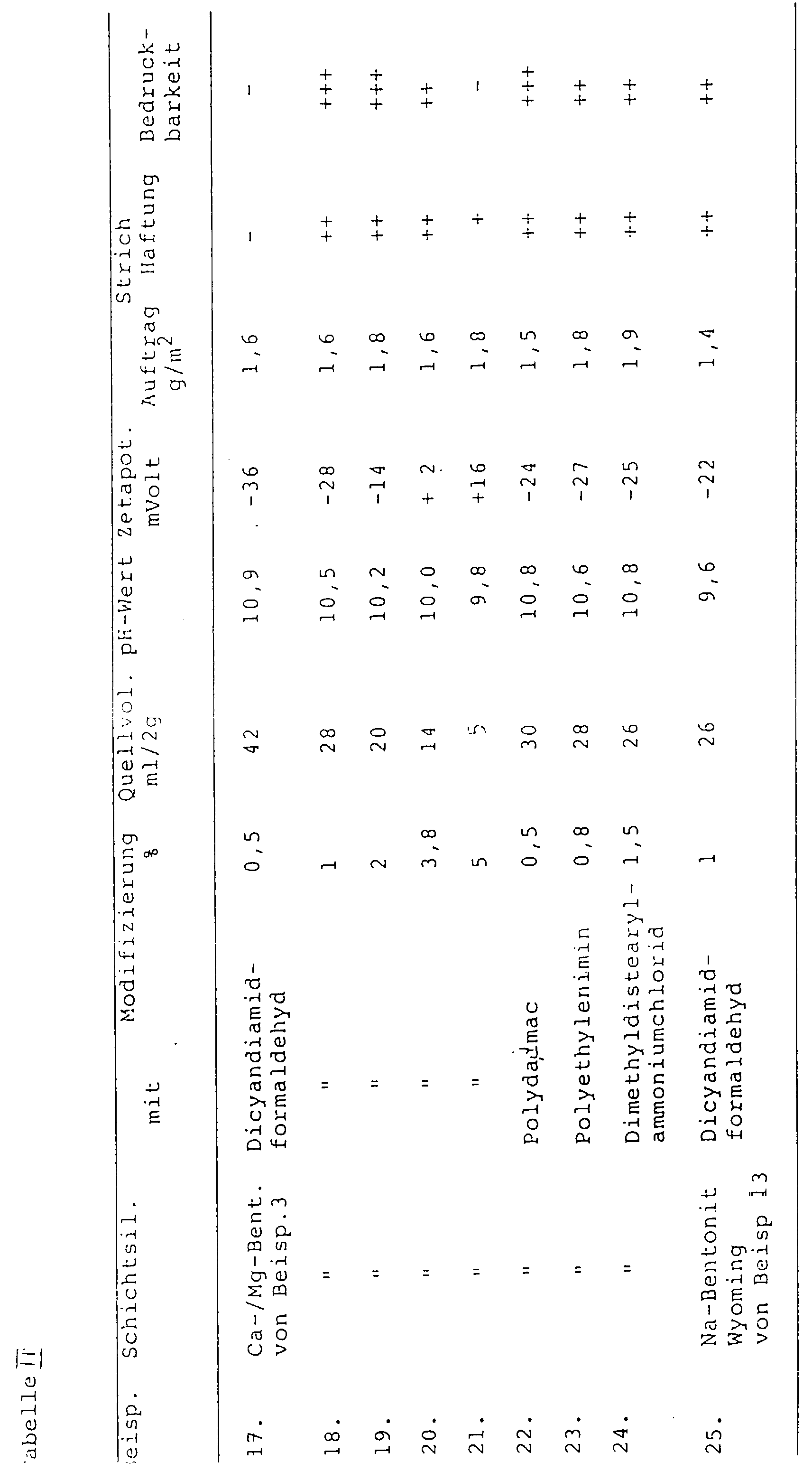

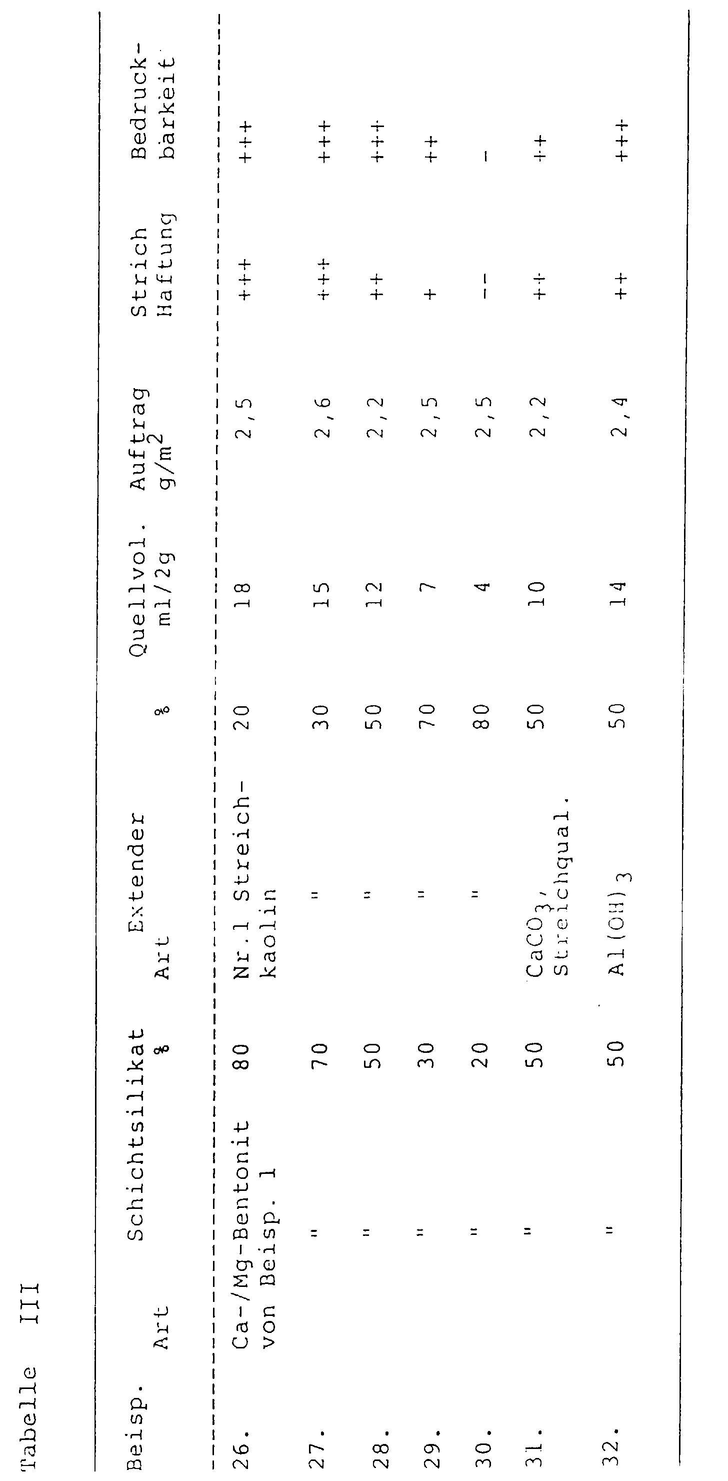

## Patentansprüche

1. Streichpigment zur Beschichtung von Druckträgern, insbesondere Papier und Karton, enthaltend mindestens ein quellfähiges Schichtsilikat, welches im wesentlichen ohne organische Bindemittel auf den Druckträger fixierbar ist, wobei der Anteil des quellfähigen Schichtsilikats mindestens 30 Gew.% und das Quellvolumen des Streichpigments 5 bis 30 ml, bezogen auf eine Suspension von 2 g Streichpigment in 100 ml Wasser beträgt, das quellfähige Schichtsilikat ein Zeta-Potential von -35 bis +10 mV hat und das quellfähige Schichtsilikat zur Einstellung des Zeta-Potentials mit bis zu 4 Gew.-% eines Kationisierungsmittels behandelt ist.

2. Streichpigment nach Anspruch 1, dadurch gekennzeichnet, daß das quellfähige Schichtsilikat als 2-gew.%-ige Dispersion in Wasser von 20 °C einen pH-Wert von 7 bis 12, vorzugsweise von 8,5 bis 10,5 hat.

3. Streichpigment nach Anspruch 1 oder 2, dadurch gekennzeichnet, daß das quellfähige Schichtsilikat eine BET-Oberfläche von 20 bis 120, vorzugsweise von 30 bis 80 m²/g, hat.

4. Streichpigment nach einem der Ansprüche 1 bis 3, dadurch gekennzeichnet, daß der Anteil des quellfähigen Schichtsilikats mindestens 40, vorzugsweise mindestens 50 Gew.% beträgt.

5. Streichpigment nach einem der Ansprüche 1 bis 3, dadurch gekennzeichnet, daß der Anteil des quellfähigen Schichtsilikats 30 bis 70 Gew.% beträgt.

6. Streichpigment nach einem der Ansprüche 1 bis 5, dadurch gekennzeichnet, daß das quellfähigen Schichtsilikat Bentonit, Montmorillonit, Hectorit, Nontronit oder Saponit natürlichen oder synthetischen Ursprungs darstellt.

7. Streichpigment nach einem der Ansprüche 1 bis 6, dadurch gekennzeichnet, daß es 70 bis 31 Gew.% eines oder mehrerer Extenderpigmente, wie Kaolin, delaminiertes Kaolin, calciniertes Kaolin, natürliches oder gefälltes Calciumcarbonat, Aluminiumhydroxid, Titandioxid oder eines anderen, für Streichfarben geeigneten Pigments enthält.

8. Streichpigment nach einem der Ansprüche 1 bis 7, dadurch gekennzeichnet, daß das quellfähige Schichtsilikat zur Einstellung des Zeta-Potentials mit 0,5 bis 2,0 Gew.-%, eines Kationisierungsmittels behandelt ist.

9. Streichpigment nach Anspruch 8, dadurch gekennzeichnet, daß das Kationisierungsmittel aus oligomeren oder polymeren organischen Verbindungen mit quaternären Stickstoffatomen ausgewählt ist.

10. Streichpigment nach Anspruch 8 oder 9, dadurch gekennzeichnet, daß das Kationisierungsmittel aus polymeren kationischen Kohlenhydraten, wie kationischer Stärke oder kationischem Guar, oder aus quaternären Ammoniumverbindungen, wie Poly-Diallyl-Dimethylammoniumchlorid (Poly-DADMAC) ausgewählt ist.

11. Wässrige, bindemittelfreie Streichfarbe zur Beschichtung von Druckträgern, insbesondere Papier oder Karton, die ein Streichpigment nach einem der Ansprüche 1 bis 10 in einer Konzentration von 5 bis 50 Gew.%, vorzugsweise von 16 bis 50 Gew.-%, insbesondere von 21 bis 40 Gew.-%, sowie gegebenenfalls Dispergierhilfsmittel enthält.

12. Streichfarbe nach Anspruch 11, dadurch gekennzeichnet, daß sie eine Viskosität von bis zu 3000 mPa.s, vorzugsweise von 100 bis 2000 mPa.s, hat.

13. Streichfarbe nach Anspruch 11 oder 12, dadurch gekennzeichnet, daß ihr pH-Wert etwa 7 bis 12, vorzugsweise etwa 8,5 bis 10,5, beträgt.

14. Verfahren zum Beschichten eines Druckträgers mit einer wäßrigen Streichfarbe nach einem der Ansprüche 11 bis 13, dadurch gekennzeichnet, daß man die Streichfarbe mit einer Geschwindigkeit von 500 bis 2000 mmin⁻¹ auf den Druckträger aufbringt.

15. Druckträger, insbesondere Papier oder Karton, der ein- oder zweiseitig mit einer Streichfarbe nach einem der Ansprüche 11 bis 13 beschichtet ist.

16. Druckträger nach Anspruch 15, dadurch gekennzeichnet, daß sein Flächengewicht größer als 20 g/m², vorzugsweise 20 bis 40 g/m², insbesondere 25 bis 38 g/m², beträgt.

17. Druckträger nach Anspruch 15 oder 16, dadurch gekennzeichnet, daß das Streichpigmentgewicht etwa 0,5 bis 6,0, vorzugsweise 1,0 bis 3,0 g/m² pro Seite beträgt.

18. Verfahren zur Herstellung eines Druckträgers nach einem der Ansprüche 15 bis 17, dadurch gekennzeichnet, daß er nach der Beschichtung einer Super- oder Softkalandrierung unterzogen wird.

19. Verwendung eines beschichteten Druckträgers nach einem der Ansprüche 15 bis 17 als Druckträger für den Tief- und Offsetdruck.

## Claims

1. A coating pigment for coating printing stock, in particular paper and cardboard, containing at least one layered silicate which is capable of swelling and which can be fixed to the printing stock substantially without organic binders, wherein the proportion of swelling layered silicate is at least 30 % by weight and the swelling volume of the coating pigment is 5 to 30 ml, in relation to a suspension of 2 g of coating pigment in 100 ml of water, the swelling layered silicate has a zeta potential of -35 to +10 mV and the swelling layered silicate is treated with up to 4 % by weight of a cationising agent so as to adjust the zeta potential.

2. A coating pigment according to Claim 1, characterised in that the swelling layered silicate as a 2 % by weight dispersion in water at 20°C has a pH value of 7 to 12, preferably 8.5 to 10.5.

3. A coating pigment according to Claim 1 or 2, characterised in that the swelling layered silicate has BET surface area of 20 to 120, preferably 30 to 80 m²/g.

4. A coating pigment according to any one of Claims 1 to 3, characterised in that the proportion of the swelling layered silicate is at least 40, preferably at least 50 % by weight.

5. A coating pigment according to any one of Claims 1 to 3, characterised in that the proportion of the swelling layered silicate is 30 to 70 by weight.

6. A coating pigment according to any one of Claims 1 to 5, characterised in that the swelling layered silicate constitutes bentonite, montmorillonite, hectorite, nontronite or saponite of natural or synthetic origin.

7. A coating pigment according to any one of Claims 1 to 6, characterised in that it contains 70 to 31 % by weight of one or more extender pigments, such as kaolin, delaminated kaolin, calcined kaolin, natural or precipitated calcium carbonate, aluminium hydroxide, titanium dioxide or other pigment suitable for coating inks.

8. A coating pigment according to any one of Claims 1 to 7, characterised in that the swelling layered silicate is treated with 0.5 to 2.0 % by weight of a cationising agent so as to adjust the zeta potential.

9. A coating pigment according to Claim 8, characterised in that the cationising agent is selected from oligomeric or polymeric organic compounds with quaternary nitrogen atoms.

10. A coating pigment according to Claim 8 or 9, characterised in that the cationising agent is selected from polymeric cationic carbohydrates, such as cationic starch or cationic guar, or from quaternary ammonium compounds, such as poly-diallyl-dimethylammonium chloride (poly-DADMAC).

11. An aqueous binder-free coating ink for coating printing stock, in particular paper or cardboard, which contains a coating pigment according to any one of Claims 1 to 10 in a concentration of 5 to 50 % by weight, preferably 16 to 50 % by weight, in particular 21 to 40 % by weight, and also optionally dispersants.

12. A coating ink according to Claim 11, characterised in that it has a viscosity of up to 3000 mPa.s, preferably 100 to 200 mPa.s.

13. A coating ink according to Claim 11 or 12, characterised in that its pH value is approximately 7 to 12, preferably approximately 8.5 to 10.5.

14. A method of coating printing stock with an aqueous coating ink according to any one of Claims 11 to 13, characterised in that the coating ink is applied to the printing stock at a rate of 500 to 2000 mmin-1.

15. Printing stock, in particular paper or cardboard, which is coated on one or both sides with a coating ink according to any one of Claims 11 to 13.

16. Printing stock according to Claim 15, characterised in that its substance weight is higher than 20 g/m², preferably 20 to 40 g/m², in particular 25 to 38 g/m².

17. Printing stock according to Claim 15 or 16, characterised in that the coating pigment weight is approximately 0.5 to 6.0, preferably 1.0 to 3.0 g/m² per side.

18. A method of producing printing stock according to any one of Claims 15 to 17, characterised in that, after coating, it is subjected to super or soft calendering.

19. Use of coated printing stock according to any one of Claims 15 to 17 as printing stock for gravure or offset printing.

## Revendications

1. Pigment de couchage, pour enduire des supports d'impression, en particulier le papier et le carton, contenant au moins un silicate lamellaire susceptible de gonfler, qui pour l'essentiel peut être fixé sur le support d'impression sans liant organique, auquel cas la quantité du silicate lamellaire susceptible de gonfler est d'au moins 30 % en poids, et le volume de gonflement du pigment de couchage est de 5 à 30 ml, par rapport à une suspension de 2 g du pigment de couchage dans 100 ml d'eau, le silicate lamellaire susceptible de gonfler a un potentiel Zeta de -35 à +10 mV, et la couche de silicate susceptible de gonfler est, pour ajuster le potentiel Zeta, traitée avec jusqu'à 4 % en poids d'un agent de cationisation.

2. Pigment de couchage selon la revendication 1, caractérisé en ce que le silicate lamellaire susceptible de gonfler, a en dispersion à 2 % en poids dans de l'eau à 20°C, un pH de 7 à 12 et de préférence de 8,5 à 10,5.

3. Pigment de couchage selon la revendication 1 ou 2, caractérisé en ce que le silicate lamellaire susceptible de gonfler a une aire BET de 20 à 120 et de préférence de 30 à 80 m²/g.

4. Pigment de couchage selon l'une des revendications 1 à 3, caractérisé en ce que la quantité du silicate lamellaire susceptible de gonfler est d'au moins 40 et de préférence d'au moins 50 % en poids.

5. Pigment de couchage selon l'une des revendications 1 à 3, caractérisé en ce que la quantité du silicate lamellaire susceptible de gonfler est de 30 à 70 % en poids.

6. Pigment de couchage selon l'une des revendications 1 à 5, caractérisé en ce que le silicate lamellaire susceptible de gonfler est la bentonite, la montmorillonite, l'hectorite, la nontronite ou la saponite d'origine naturelle ou synthétique.

7. Pigment de couchage selon l'une des revendications 1 à 6, caractérisé en ce qu'il contient de 70 à 31 % en poids d'un ou plusieurs pigments de charge, tels que le kaolin, le kaolin délaminé, le kaolin calciné, le carbonate de calcium naturel ou précipité, l'hydroxyde d'aluminium, le dioxyde de titane ou un autre pigment convenant aux couchages.

8. Pigment de couchage selon l'une des revendications 1 à 7, caractérisé en ce que le silicate lamellaire suscepteible de gonfler est, pour ajuster le potentiel Zeta, traité avec 0,5 à 2,0 % en poids d'un agent de cationisation.

9. Pigment de couchage selon la revendication 8, caractérisé en ce que l'agent de cationisation est choisi parmi les composés organiques oligomères ou polymères comportant des atomes d'azote quaternaires.

10. Pigment de couchage selon la revendication 8 ou 9, caractérisé en ce que l'agent de cationisation est choisi parmi les hydrates de carbone cationiques polymères tels que l'amidon cationique ou la gomme de guar cationique, ou encore parmi les composés de l'ammonium quaternaire tels que le poly(chlorure de diallyldiméthylammonium) (Poly-DADMAC).

11. Couchage aqueux, sans liant, pour enduire des supports d'impression, en particulier le papier ou le carton, qui contient un pigment de couchage selon l'une des revendications 1 à 10 à une concentration de 5 à 50 % en poids, de préférence de 16 à 50 % en poids et en particulier de 21 à 40 % en poids, et éventuellement des auxiliaires de dispersion.

12. Couchage selon la revendication 11, caractérisé en ce qu'il a une viscosité allant jusqu'à 3000 mPa.s, de préférence de 100 à 2000 mPa.s.

13. Couchage selon la revendication 11 ou 12, caractérisé en ce que son pH est d'environ 7 à 12, et de préférence d'environ 8,5 à 10,5.

14. Procédé pour enduire un support d'impression avec un couchage aqueux selon l'une des revendications 11 à 13, caractérisé en ce qu'on applique le couchage sur le support d'impression à une vitesse de 500 à 2000 m.min⁻¹.

15. Support d'impression, en particulier papier ou carton, qui est revêtu, sur une ou deux faces, d'un couchage selon l'une des revendications 11 à 13.

16. Support d'impression selon la revendication 15, caractérisé en ce que sa masse surfacique est supérieure à 20 g/m², de préférence de 20 à 40 g/m², et en particulier de 25 à 38 g/m².

17. Support d'impression selon la revendication 15 ou 16, caractérisé en ce que la masse surfacique du pigment de couchage est d'environ 0,5 à 6,0, et en particulier de 1,0 à 3,0 g/m² par face.

18. Procédé de fabrication d'un support d'impression selon l'une des revendications 15 à 17, caractérisé en ce qu'il est soumis, après l'enduction, à un super-calandrage ou à un satinage ménagé.

19. Utilisation d'un support d'impression enduit selon l'une des revendications 15 à 17, comme support d'impression pour impression en héliogravure et en offset.
